(19) Europäisches Patentamt

European Patent Office

Office européen des brevets

(11) Veröffentlichungsnummer: **0 427 058 B1**

# EUROPÄISCHE PATENTSCHRIFT

(45) Veröffentlichungstag der Patentschrift: **27.07.94**

(51) Int. Cl.⁵: **C08L 61/20**, C09J 161/20

(21) Anmeldenummer: **90120545.0**

(22) Anmeldetag: **26.10.90**

(54) **Wässrige Härtermischung zur Härtung von Aminoplast-Harzen.**

(30) Priorität: **06.11.89 DE 3936855**

(43) Veröffentlichungstag der Anmeldung:
**15.05.91 Patentblatt 91/20**

(45) Bekanntmachung des Hinweises auf die Patenterteilung:
**27.07.94 Patentblatt 94/30**

(84) Benannte Vertragsstaaten:
**AT BE CH DE FR GB LI NL**

(56) Entgegenhaltungen:
**EP-A- 0 184 646**

(73) Patentinhaber: **BASF Aktiengesellschaft
Carl-Bosch-Strasse 38
D-67063 Ludwigshafen(DE)**

(72) Erfinder: **Lehnert, Heinz
Anselm-Feuerbach-Strasse 11
W-6710 Frankenthal(DE)**
Erfinder: **Dormeyer, Dieter
Raiffeisenstrasse 13
W-6701 Fussgoenheim(DE)**

**Beschreibung**

Die vorliegende Erfindung betrifft eine wäßrige Härtermischung auf Basis einer Säure, eines Oligoglykols und/oder Oligoglykolethers, eines Polyvinylalkohols und/oder eines teilhydrolysierten Polyvinylacetats, eines Emulgators und eines Thixotropiermittels zur Härtung von Aminoplast-Harzen und dessen Verwendung in einem verfahren zur Rollenheißkaschierung von Holzwerkstoffen mit Folien.

Beim Rollenheißkaschier-Verfahren werden Holzwerkstoffe wie Spanplatten kontinuierlich mit einem Leim auf Basis eines Aminoplast-Harzes und einem Härter beaufschlagt und dann in einem Kalander mit einer Folie bei erhöhter Temperatur und Druck verklebt. Mit Härtern des Standes der Technik, wie sie beispielsweise in der EP-A-184 646 beschrieben sind, treten bei diesem Verfahren noch einige Nachteile auf. So beobachtet man ein Abheben der Folie an den Schmalseiten der Platte nach Verlassen der Kalanderanlage. Die aufgeklebte Folie erhält nach einiger Verweilzeit durch den Leim eine gewisse Sprödigkeit, die die Aushärtung des eingedrungenen Leims anzeigt. Der Verbund zwischen Folie und Platte ist allerdings schwach. Die Folie läßt sich leicht abtrennen. Beide Effekte treten besonders dann auf, wenn mit einem Leim gearbeitet wird, der formaldehydärmer als die bisher üblichen Flächenleime ist und z.B. ein Molverhältnis von Formaldehyd:Harnstoff von 1,4:1 aufweist. In der EP-A-184 646 werden für das Rollenheißkaschier-Verfahren Harnstoff-Formaldehyd-Formaldehyd-Harze verwendet mit einem Molverhältnis Formaldehyd:Harnstoff von 1,4:1 bis 2,2:1. Diese weisen aber eine unerwünscht hohe Formaldehydemission auf.

Aufgabe der vorliegenden Erfindung war, einen Härter zur Härtung von Aminoplast-Harzen zu entwickeln, mit dem nach dem Rollenheißkaschierverfahren Holzwerkstoffe wie Spanplatten mit Folien beaufschlagt werden können, ohne daß ein Abheben dieser Folien an den Schmalseiten der Platte auftritt. Weiterhin sollte die Haftfestigkeit der Folie auf der Spanplatte verbessert werden, auch bei der Verwendung von Leimen auf Basis von Harnstoff-Formaldehyd-Harzen mit einem Molverhältnis von Formaldehyd:Harnstoff von unter 1,4:1.

Gegenstand der vorliegenden Erfindung ist eine wäßrige Härtermischung zur Härtung von Aminoplast-Harzen, enthaltend

(A) 50 bis 80 Gew.-% einer ein- oder mehrbasischen anorganischen oder organischen Säure,

(B) 1 bis 40 Gew.-% Oligoglykole und/oder Oligoglykolether,

(C) 1 bis 20 Gew.-% Polyvinylalkohol und/oder teilhydrolysiertes Polyvinylacetat,

(D) 0,1 bis 1,5 Gew.-% eines Emulgators und

(E) 0,5 bis 10 Gew.-% eines Thixotropiermittels,

wobei sich die Mengenangaben der Komponenten (A), (B), (C), (D) und (E) auf 100 Gew.-% ergänzen und sich auf den Feststoffgehalt der wäßrigen Härtermischung beziehen.

Weiterhin bezieht sich die Erfindung auf die Verwendung dieser Härtermischung zur Härtung von Aminoplast-Harzen sowie auf ein Verfahren zur Rollenheißkaschierung von Holzwerkstoffen mit Folien unter Verwendung der Härtermischung.

Zu den Aufbaukomponenten ist im einzelnen folgendes auszuführen:

Als Komponente (A) sind ein- oder mehrbasische oder organische Säuren geeignet. Bevorzugt werden solche verwendet, deren $pK_a$-Wert kleiner oder gleich 2 ist und die im Wasser hinreichend löslich sind wie Phosphorsäure, Benzolsulfonsäure, Dichloressigsäure, Trichloressigsäure oder Maleinsäure. Bevorzugt wird Maleinsäure verwendet, wobei diese Dicarbonsäure auch in Form ihres Anhydrids eingesetzt werden kann. Die Komponente (A) wird in Mengen von 50 bis 80 Gew.-%, bevorzugt 60 bis 80 Gew.-%, bezogen auf den Feststoffgehalt der wäßrigen Härtermischung verwendet.

Als Komponente (B) sind Oligoglykole oder Oligoglykolether oder deren Gemische geeignet. Oligoglykole im Sinne der Erfindung sind Oligomere, die sich vom Ethylenglykol, Propylenglykol oder 1,2-, 1,4- bzw. 2,3-Butylenglykol ableiten. Diese Oligomeren können aus 2 bis 10 Einheiten der jeweiligen Glykole bestehen. Bevorzugt sind die Oligomeren, die sich vom Ethylenglykol ableiten, wobei insbesondere Di-, Tri-, Tetra- und Pentaethylenglykol zu nennen sind.

Die Oligoglykole können an ihren endständigen Hydroxylgruppen entweder unverethert und mit niederen Alkoholen verethert sein, wobei sowohl partiell wie auch vollständig veretherte Produkte verwendbar sind. Als mögliche Veretherungskomponenten dienen niedere Alkohole wie Methanol, Ethanol, Isopropanol oder Butanol. Die Komponente (B) wird in Mengen verwendet von 1 bis 40 Gew.-%, bevorzugt 1 bis 3 Gew.-%, bezogen auf den Feststoffgehalt der wäßrigen Härtermischung.

Als Komponente (C) ist Polyvinylalkohol oder teilhydrolysiertes Polyvinylacetat oder deren Gemische geeignet. Polyvinylalkohol ist kommerziell z.B. unter der Bezeichnung Moviol® (Fa. Hoechst) erhältlich. Beim teilhydrolysierten Polyvinylacetat sind mindestens 50 %, bevorzugt 80 % der im Polyvinylacetat ursprünglich vorhandenen Estergruppen hydrolysiert. Die Komponente (C) wird in Mengen von 1 bis 20 Gew.-%, bevorzugt 1 bis 5 Gew.-% verwendet.

Als Komponente (D) sind übliche nichtionische, anionische oder kationische Emulgatoren geeignet, wie s.ie beispielsweise in der EP-A-184 646 beschrieben sind. Bevorzugt wird Triisobutylphosphat verwendet. Die Komponente (D) wird in Mengen von 0,5 bis 1,5 Gew.-% verwendet.

Als Komponente (E) sind übliche Thixotropierungsmittel geeignet, wie sie beispielsweise in der EP-A-184 646 beschrieben sind. Bevorzugt werden Xanthan, Polysaccharide oder Polyacrylamide verwendet. Die Komponente (E) wird in Mengen von 0,5 bis 10 Gew.-%, bevorzugt 1 bis 2 Gew.-%, bezogen auf den Feststoffgehalt der wäßrigen Härtermischung verwendet.

Darüberhinaus können noch weitere übliche Hilfs- und Zusatzstoffe wie Harnstoff, Entschäumer oder Metallsalze bis zu einer Menge von 20 Gew.-%, bezogen auf den Feststoffgehalt der wäßrigen Härtermischung, mitverwendet werden.

Die wäßrige Härtermischung wird durch Lösen oder Dispergieren der Komponenten (A) bis (E) in beliebiger Reihenfolge in Wasser hergestellt mit anschließender Verdünnung mit weiterem Wasser auf die gewünschte Verarbeitungskonzentration. Der Feststoffgehalt der wäßrigen Härtermischung liegt zwischen 20 und 60 Gew.-%, bevorzugt 30 bis 50 Gew.-%.

Holzwerkstoffe, die sich für die erfindungsgemäßen Verfahren eignen, sind z.B. Spanplatten, Hartfaserplatten, Tischlerplatten oder Vollholz.

Als Klebemittel auf Aminoplast-Harz-Basis, die im Rollenheißkaschier-Verfahrenvon Holzwerkstoffen mit Holzfurnieren zur Anwendung kommen, sind die üblichen an sich bekannten Aminoplast-Leimharze zu nennen. Es werden vorzugsweise Harnstoff-Formaldehyd-Harze verwendet. Sie weisen im allgemeinen ein Molverhältnis von Formaldehyd:Harnstoff von 1,0:1,0 bis 1,5:1,0, vorzugsweise 1,0:1,0 bis 1,4:1,0 und insbesondere 1,0:1,0 bis 1,35:1,0 auf. Die Harnstoff-Formaldehyd-Harze können mit 0,8 bis 3 Gew.-%, bezogen auf das Festharz, mit $C_1$-$C_4$-Alkoholen wie Methanol und Ethanol oder $C_2$-$C_4$-Diolen wie Diethylenglykol, Propylenglykol und Butylenglykol verethert sein. Ihre Viskositäten liegen zwischen 600 und 10.000 mPas, bevorzugt 1000 bis 10.000 und insbesondere 1500 bis 3000 mPas.

Als Folien, mit denen die Holzwerkstoffe im erfindungsgemäßen Verfahren beschichtet werden, verwendet man die üblichen an sich bekannten rollfähigen Oberflächenmaterialien. Dies sind beispielsweise thermoplastische Folien wie PVC-Folien, ABS-Folien (Acrylnitril-Butadien-Styrol-Folien) oder Polystyrolfolien sowie Folien auf Papierbasis wie Melaminfilme, Grundier- und Dekorfolien, Fertigeffekt-Folien oder DAP-Folien (Diallylphthalat-Folien). Es können aber auch rollfähige Schichtstoffplatten für diesen Zweck verwendet werden. Dies sind Laminate aus Träger- und Dekorpapieren, die mit reinem Polyesterharz durchtränkt und danach schichtfest miteinander verpreßt und ausgehärtet werden.

Als Holzfurniere dienen die üblichen an sich bekannten Furnierblätter, die in Form von Messer- oder Schälfurnieren aus den jeweils gewünschten Holzarten erhalten werden.

Zur Durchführung des erfindungsgemäßen Verfahrens zur Rollenheißkaschierung von Holzwerkstoffen mit Folien wird zunächst die Folie mit 5 bis 30 g/m$^2$, vorzugsweise 10 bis 20 g/m$^2$ des erfindungsgemäßen Härters besprüht und getrocknet. Der zu kaschierende Holzwerkstoff wird auf der Oberfläche mit 30 bis 80 g/m$^2$, vorzugsweise 40 bis 60 g/m$^2$ Aminoplast-Harz beleimt und anschließend wird auf die beleimte Oberfläche die mit der Härterlösung behandelte Folie mittels einer beheizten Walze mit einem Druck von etwa 0,2 bis 0,8 N/mm$^2$ aufgepreßt. Die Preßtemperatur liegt üblicherweise bei 150 bis 200 °C. Sie ist jedoch über einen weiten Bereich hinweg variable, der u.a. auch von den verwendeten Materialien abhängig ist. So sind Preßprozesse auch bei Raumtemperatur möglich.

Die Vorschubgeschwindigkeit des Holzwerkstoffes beim Kaschiervorgang liegt im allgemeinen bei 25 bis 30 m/min.

Für den bevorzugten Fall, daß der Härter nicht auf die Folie, sondern wie das Aminoplastharz auf den Holzwerkstoff gegeben wird, gelten die o.g. Bedingungen. Nach der Beleimung der Holz-Oberfläche wird jedoch das aufgetragene Aminoplast-Harz zunächst getrocknet und anschließend mit dem erfindungsgemäßen Härter behandelt und schließlich mit der härterfreien Folie verpreßt.

Mit der erfindungsgemäßen wäßrigen Härtermischung gelingt es, die in der Praxis geforderten Werte für Vorschubgeschwindigkeit und Preßzeit einzuhalten. In den erfindungsgemäßen Verfahren ergibt sich exakt zum Zeitpunkt des Verpressens eine rasche und innige Vermischung zwischen Klebemittel und Härter, woraus eine schnelle Aushärtung resultiert. Der erfindungsgemäße Härter benetzt die Oberfläche der Folie bzw. des Furniers bzw. der jeweiligen Klebemittelschicht gleichmäßig. Kantenabhebungen treten nicht auf und die Folie haftet fest auf der Holzwerkstoff-Oberfläche. Die nach dem erfindungsgemäßen Verfahren hergestellten Holzwerkstoffe weisen eine hohe Qualität auf. Sie sind Wasser und Druckfest und haben eine optisch einwandfreie Oberfläche.

Beispiele

Durch Mischen der in der Tabelle 1 angegebenen Komponenten wurden die jeweiligen wäßrigen Härtermischungen hergestellt. Auf eine Spanplatte von 15 mm Dicke wurden 39 g/m$^2$ eines Harnstoff-Formaldehyd-Harzes mit einem Molverhältnis Formaldehyd:Harnstoff von 1,35:1, einer Viskosität von 4700 mPas (20°C), einem Feststoffgehalt von 68 Gew.-% und einer Veretherung mit 0,8 Gew.-% Methanol und 1 Gew.-% Ethylenglykol aufgebracht. Darauf wurden 3,9 g/m$^2$ der jeweiligen wäßrigen Härtermischung aufgesprüht.

Nach dem Rollenheißkaschieren wurde auf die so behandelte Oberfläche eine Papierfolie mit einem Gewicht von 85 g/m$^2$ bei einer Preßtemperatur von 140°C, einem Preßdruck von 0,5 N/mm$^2$ und einer Preßzeit von 2 Sekunden aufgeklebt. Zur Bestimmung der Gelierzeit wurde eine Mischung von 100 g Harnstoff-Formaldehyd-Harz und 10 g Härter hergestellt. Die Ergebnisse sind in der Tabelle 2 aufgeführt. Während die Verleimung mit einem Härter ohne Polyvinylalkohol (Vergl.Vers. 8) bei der Verarbeitung starke Kantenabhebung zeigte, war dies bei Zusatz von Polyvinylalkohol nicht mehr der Fall.

# Tabelle 1

| Bei-spiel | Säure [g] | Oligoglykol [g] | Polyvinyl-alkohol [g] | Emulgator[1] [g] | Thixotropier-mittel [g] | Metall-salz [g] | Ent-schäumer [g] | Harn-stoff [g] | Wasser [g] |
|---|---|---|---|---|---|---|---|---|---|
| 1 | Maleinsäure-anhydrid 32,4 | Triethylen-glykol 0,6 | 0,6 | 0,1 | Xanthan 0,3 | Magnesium-chlorid 1,25 g | 0,1 | 6,9 | 57,75 |
| 2 | Maleinsäure-anhydrid 25,1 | Triethylen-glykol 0,5 | 0,6 | 0,1 | Xanthan 0,4 | Magnesium-chlorid 1,25 | 0,1 | 6,9 | 65,05 |
| 3 | Phosphorsäure 16,0 | Triethylen-glykol 0,7 | 0,6 | 0,2 | Xanthan 0,7 | Magnesium-chlorid 1,25 | 0,1 | 10,0 | 70,45 |
| 4 | Maleinsäure-anhydrid 30,2 | Diethylen-glykol 0,6 | 0,9 | 0,1 | Xanthan 0,3 | Calcium-chlorid 1,25 | 0,1 | 6,9 | 59,65 |
| 5 | Maleinsäure 35,7 | Diethylen-glykol 0,3 | 0,3 | 0,1 | Polyacryl-amid[2] 0,3 | Magnesium-sulfat 1,25 | 0,1 | 3,0 | 58,95 |
| 6 | Dichloressig-säure 12,6 | Triethylen-glykol 1,2 | 0,9 | 0,1 | Xanthan 1,0 | Magnesium-chlorid 1,0 | 0,1 | 6,0 | 77,10 |
| 7 | Trichloressig-säure 14,2 | Triethylen-glykol 1,2 | 0,9 | 0,2 | Xanthan 0,4 | Kaliumalumi-niumsulfat 1,25 | 0,1 | 7,0 | 74,75 |
| 8 (Vgl.) | Maleinsäure-anhydrid 32,4 | Triethylen-glykol 0,6 | – | 0,1 | Xanthan 0,3 | Magnesium-chlorid 1,25 | 0,1 | 6,9 | 58,35 |

1) Als Emulgator diente in allen Fällen ein nichtionisches Anlagerungsprodukt von Ethylenoxid an Octylphenol.

2) Als Polyacrylamid diente ein Produkt mit einem Molekulargewicht von ca. $6 \times 10^6$, copolymerisiert mit 3 Gew.-% Acrylsäure, neutralisiert.

3) Als Entschäumer diente in allen Fällen ein Produkt auf Basis Triisobutylphosphat.

Tabelle 2

| Beispiele | Gelierzeit (s) 10 Gew.-Teile Klebemittel und 1 Gew.-Teil Härter Temperatur 20°C | Folie Beurteilung | Furnier Preßzeit (s) 15 Beurteilung | 20 | 25 |
|---|---|---|---|---|---|
| 1 | 60 | sehr gut | sehr gut bis gut | sehr gut | sehr gut |
| 2 | 58 | sehr gut | befriedigend | sehr gut | sehr gut |
| 3 | 62 | sehr gut | befridigend bis ausreichend | gut | sehr gut |
| 4 | 55 | sehr gut | befriedigend | sehr gut | sehr gut |
| 5 | 64 | sehr gut | befriedigend | sehr gut | sehr gut |
| 6 | 55 | sehr gut | gut | sehr gut | sehr gut |
| 7 | 45 | sehr gut | befriedigend | gut | sehr gut |
| 8 (Vergleich) | 60 | befriedigend[2] | befriedigend[1] | gut[1] | gut |

Die Beurteilung umfaßte dabei folgende Kenngrößen:;

a) visuelle Beurteilung der Oberfläche
b) Wasserfestigkeit
c) Druckfestigkeit
d) Verhalten gegen Wiedererwärmung durch Aufsetzen eines heißen Topfes mit einer Temperatur von 90 bis 100°C.

[1] Kantenablösungen
[2] Folie haftet nicht auf der gesamten Oberfläche

Patentansprüche

1. Wäßrige Härtermischung zur Härtung von Aminoplast-Harzen, enthaltend (A) 50 bis 80 Gew.-% einer ein- oder mehrbasischen anorganischen oder organischen Säure,

(B) 1 bis 40 Gew.-% Oligoglykole und/oder Oligoglykolether, die aus 2 bis 10 Einheiten der jeweiligen Glykole bestehen,
(C) 1 bis 20 Gew.-% Polyvinylalkohol und/oder teilhydrolysiertes Polyvinylacetat,
(D) 0,1 bis 1,5 Gew.-% eines Emulgators und
(E) 0,5 bis 10 Gew.-% eines Thixotropiermittels,
wobei sich die Mengenangaben der Komponenten (A), (B), (C), (D) und (E) auf 100 Gew.-% ergänzen und sich auf den Feststoffgehalt der wäßrigen Härtermischung beziehen.

2. Härtermischung nach Anspruch 1, enthaltend Polyvinylalkohol als Komponente (C).

3. Härtermischung nach einem der Ansprüche 1 oder 2, enthaltend teilhydrolysiertes Polyvinylacetat als Komponente (C).

4. Härtermischung nach einem der Ansprüche 1 bis 3, enthaltend teilhydrolysiertes Polyvinylacetat, bei dem mindestens 50 % der ursprünglich vorhandenen Estergruppen hydrolysiert sind, als Komponente (C).

5. Härtermischung nach einem der Ansprüche 1 bis 4, enthaltend teilhydrolysiertes Polyvinylacetat, bei dem mindestens 80 % der ursprünglich vorhandenen Estergruppen hydrolysiert sind, als Komponente (C).

6. Verwendung der Härtermischung gemäß einem der Ansprüche 1 bis 5 zur Härtung von Aminoplast-Harzen.

7. Verwendung der Härtermischung gemäß einem der Ansprüche 1 bis 5 zur Härtung von Harnstoff-Formaldehyd-Harzen.

8. Verwendung der Härtermischung gemäß einem der Ansprüche 1 bis 5 zur Härtung von Harnstoff-Formaldehyd-Harzen mit einem Molverhältnis Formaldehyd:Harnstoff von 1,0:1 bis 1,5:1.

9. Verwendung der Härtermischung nach einem der Ansprüche 6 bis 8 bei der Kaschierung von Holzwerkstoffen mit Folien nach dem Rollenheißkaschier-Verfahren.

10. Verfahren zur Heißkaschierung von Holzwerkstoffen mit Folien und Aminoplast-Harzen als Klebemitteln, dadurch gekennzeichnet, daß man die Aminoplastharze mit einem Härter gemäß einem der Ansprüche 1 bis 5 aushärtet.

**Claims**

1. An aqueous composition of a curing agent for curing aminoplast resins, containing
(A) from 50 to 80% by weight of a monobasic or polybasic inorganic or organic acid,
(B) from 1 to 40% by weight of oligoglycols and/or oligoglycol ethers which consist of from 2 to 10 units of the particular glycols,
(C) from 1 to 20% by weight of polyvinyl alcohol and/or partially hydrolyzed polyvinyl acetate,
(D) from 0.1 to 1.5% by weight of an emulsifier and
(E) from 0.5 to 10% by weight of a thixotropic agent,
the stated amounts of components (A), (B), (C), (D) and (E) summing to 100% by weight and being based on the solids content of the aqueous composition of the curing agent.

2. A composition of a curing agent as claimed in claim 1, containing polyvinyl alcohol as component (C).

3. A composition of a curing agent as claimed in claim 1 or 2, containing partially hydrolyzed polyvinyl acetate as component (C).

4. A composition of a curing agent as claimed in any of claims 1 to 3, containing partially hydrolyzed polyvinyl acetate in which at least 50% of the ester groups originally present are hydrolyzed, as component (C).

5. A composition of a curing agent as claimed in any of claims 1 to 4, containing partially hydrolyzed polyvinyl acetate in which at least 80% of the ester groups originally present are hydrolyzed, as component (C).

6. Use of a composition of a curing agent as claimed in any of claims 1 to 5 for curing aminoplast resins.

7. Use of a composition of a curing agent as claimed in any of claims 1 to 5 for curing urea/formaldehyde resins.

8. Use of a composition of a curing agent as claimed in any of claims 1 to 5 for curing urea/formaldehyde resins having a molar formaldehyde/urea ratio of from 1.0 : 1 to 1.5 : 1.

9. Use of a composition of a curing agent as claimed in any of claims 6 to 8 in the lamination of woodworking materials with films by the hot roller lamination process.

10. A process for the hot lamination of woodworking materials with films and aminoplast resins as adhesives, wherein the aminoplast resins are cured using a curing agent as claimed in any of claims 1 to 5.

**Revendications**

1. Mélange durcissant aqueux pour le durcissement de résines aminoplastes, qui contient
   (A) 50 à 80% en poids d'un acide monobasique ou polybasique, inorganique ou organique,
   (B) 1 à 40% en poids d'oliglycols et/ou d'éthers d'oliglycols, qui se composent de 2 à 10 unités des glycols concernés,
   (C) 1 à 20% en poids de poly(alcool vinylique) et/ou de poly(acétate de vinyle) partiellement hydrolysé,
   (D) 0,1 à 1,5% en poids d'un émulsif et
   (E) 0,5 à 10% en poids d'un agent thixotropique,
   où les indications quantitatives des composants (A), (B), (C), (D) et (E) parachèvent 100% en poids et se rapportent à la teneur en substances solides du mélange durcisseur aqueux.

2. Mélange durcisseur suivant la revendication 1, qui contient du poly(alcool vinylique) à titre de composant (C).

3. Mélange durcisseur suivant l'une quelconque des revendications 1 et 2, qui contient du poly(acétate de vinyle) partiellement hydrolysé à titre de composant (C).

4. Mélange durcisseur suivant l'une quelconque des revendications 1 à 3, qui contient du poly(acétate de vinyle) partiellement hydrolysé, dans lequel au moins 50% des radicaux ester présents à l'origine sont hydrolysés, à titre de composant (C).

5. Mélange durcisseur suivant l'une quelconque des revendications 1 à 4, qui contient du poly(acétate de vinyle) partiellement hydrolysé, dans lequel au moins 80% des radicaux esters présents à l'origine sont hydrolysés, à titre de composant (C).

6. Utilisation du mélange durcisseur suivant l'une quelconque des revendications 1 à 5 en vue du durcissement de résines aminoplastes.

7. Utilisation du mélange durcisseur suivant l'une quelconque des revendications 1 à 5 en vue du durcissement de résines d'urée-formaldéhyde.

8. Utilisation du mélange durcisseur suivant l'une quelconque des revendications 1 à 5 en vue du durcissement de résines d'urée-formaldéhyde, avec un rapport molaire du formaldéhyde à l'urée de 1,0:1 à 1,5:1.

9. Utilisation du mélange durcisseur suivant l'une quelconque des revendications 6 à 8 au cours de la stratification ou lamification de matériaux dérivés du bois avec des feuilles selon le procédé de thermostratification ou thermolamification à rouleaux.

10. Procédé de thermostratification ou -lamification de matériaux dérivés du bois avec des feuilles et des résines aminoplastes servant de colles, caractérisé en ce que l'on durcit les résines aminoplastes avec un durcisseur suivant l'une quelconque des revendications 1 à 5.